# EUROPÄISCHE PATENTANMELDUNG

(11) **EP 1 990 602 A1**
(43) Veröffentlichungstag der Anmeldung: **12.11.2008**
(21) Anmeldenummer: 08006130.2
(22) Anmeldetag: 28.03.2008
(51) Int. Cl.: G01B 3/30

(54) **Verfahren und Vorrichtung zur Kalibrierung einer Bügelmesschraube mittels eines Längennormals**

(30) Priorität: 07.05.2007 DE 102007021650
(71) Anmelder: Eisinger, Manfred, 71229 Leonberg (DE)
(72) Erfinder: Eisinger, Manfred, 71229 Leonberg (DE)
(74) Vertreter: Gleiss, Alf-Olav

(57) **Zusammenfassung**

Die Erfindung betrifft ein Verfahren zur Kalibrierung einer Bügelmessschraube mittels eines Längennormals. Es sind folgende Schritte vorgesehen:
- Mittels einer Vorrichtung erfolgendes Fixieren des Längennormals in im Wesentlichen horizontaler Lage,
- Anbringen von Unterstützungsflächen an die Enden des Längennormals,
- Auflegen von Tastenden der Bügelmessschraube auf die Unterstützungsflächen und
- Messen der Länge des Längennormals mit der Bügelmessschraube.

Ferner betrifft die Erfindung eine Vorrichtung zur Kalibrierung einer Bügelmessschraube mittels eines Längennormals. Es ist ein das Längennormal (3) in in etwa horizontaler Lage aufnehmender Halter (4) vorgesehen, wobei Enden (12) des Längennormals (3) mit Unterstützungsflächen (15) versehen sind, auf denen Tastenden (16) der Bügelmessschraube (2) zur Abstützung auflegbar sind.

## Beschreibung

Die Erfindung betrifft ein Verfahren zur Kalibrierung einer Bügelmessschraube mittels eines Längennormals und eine Vorrichtung hierzu.

Bügelmessschrauben dienen zum präzisen Vermessen von Strecken, wobei ein zu vermessendes Bauteil zwischen Tastenden der Bügelmessschraube angeordnet und über einen Verschiebeweg eines der Tastenden über eine geeignete Skalierung die Ausdehnung bestimmt wird. Bei den allermeisten Bügelmessschrauben erfolgt die Verstellung des Tastendes über eine Fühlschraube, wobei eine Skalierung aufgedruckt oder eingeätzt ist. Es existieren auch numerisch/digital ablesbare Ausführungsformen. All diesen ist aber gemein, dass sie von Zeit zu Zeit kalibriert werden müssen, da prinzipbedingt durch die Art des Messvorgangs im Wege einer Wegverschiebung eines der Tastenden im Laufe der Messvorgänge über unvermeidliches Spiel eine gewisse Toleranz und Ungenauigkeit auftritt, die über den Kalibriervorgang, also das Abgleichen von Bezugmarken beziehungsweise einer Skala und wenigstens einer Bezugsmarke, reduziert werden können. Im Stand der Technik ist es hierzu geläufig, zwischen den Tastenden der Bügelmessschraube ein Längennormal anzuordnen, also einen meist zylindrisch ausgeformten Körper, der eine genau definierte Länge aufweist, die sich auch unter sich ändernden Umgebungsbedingungen, beispielsweise Umgebungstemperatur, nur äußerst geringfügig ändert, wobei diese Änderungen im Rahmen des Vernachlässigbaren bleiben, so dass ein Abgleich eines von der Bügelmessschraube gemessenen Ergebnisses mit einem bekannten Längenmaß und gegebenenfalls eine Justierung der Bügelmessschraube erfolgt. Das Längennormal kann hierbei als Einstellmaß, Endmaß oder anderes genormtes Teil bekannter Länge ausgebildet sein.

Die Handhabung während des Kalibriervorgangs erfordert Umsicht und Aufmerksamkeit und große Sorgfalt, damit das Längennormal mit seinen Stirnflächen sorgfältig zwischen den Tastenden der Bügelmessschraube liegt und keine Winkelverschiedenheit zwischen der Längsachse des Längennormals und den Längsachsen der Tastenden der Bügelmessschraube auftritt, die zu einer Verfälschung des Messergebnisses führen könnte. Ferner müssen sowohl das Längennormal als auch die Bügelmessschraube als Präzisionsgeräte mit hoher mechanischer Sorgfalt behandelt werden. Aus diesem Grunde sind im Regelfall zwei Personen erforderlich, von denen eine die Bügelmessschraube bedient, die andere aber das Längennormal sehr sorgfältig zwischen den Tastenden der Bügelmessschraube anordnet. Gerade bei großen Bügelmessschrauben, also solchen, die zwischen den Tastenden eine große Weite aufweisen, ist das Kalibrieren umständlich und kompliziert. Auch bei den im Stand der Technik bekannten Vorgehensweisen, bei denen die Bügelmessschraube in einem Vertikalständer wie zur Durchführung von Serienmessungen eingespannt wird und ein Bediener manuell das Längennormal wie einen zu vermessenden Gegenstand zwischen den Tastenden anordnet, ist fehlerauffällig.

Aufgabe der Erfindung ist es, ein Verfahren und eine Vorrichtung bereitzustellen, die die genannten Nachteile vermeidet und eine universelle, reproduzierbare und wenig fehleranfällige Kalibrierung von Bügelmessschrauben mittels eines Längennormals zulässt.

Hierzu wird ein Verfahren zur Kalibrierung einer Bügelmessschraube mittels eines Längennormals vorgeschlagen, bei dem folgende Schritte vorgesehen sind:
- Mittels einer Vorrichtung erfolgendes Fixieren des Längennormals in im Wesentlichen horizontaler Lage,
- Anbringen von Unterstützungsflächen an die Enden des Längennormals,
- Auflegen von Tastenden der Bügelmessschraube auf die Unterstützungsflächen und
- Messen der Länge des Längennormals mit der Bügelschraube und Abgleichen von Bezugsmarken.

Anders als im Stand der Technik wird hier zunächst nicht die Bügelmessschraube gehalten oder fixiert, sondern das Längennormal. Hierzu ist eine entsprechende Vorrichtung vorgesehen, die ein Fixieren des Längennormals in eben dieser im Wesentlichen horizontalen Lage zulässt. In Betracht kommt hier jede das Längennormal in geeigneter Weise aufnehmende und fixierende Vorrichtung. Sodann werden an die Enden des Längennormals, also dort, wo sich die Stirnflächen des Längennormals befinden, die als Bezugsflächen in Hinblick auf das zu vermessende und erwartete Streckenmaß dienen, Unterstützungsflächen angebracht. Unterstützungsflächen sind hierbei als solche Flächen zu verstehen, die ein Auflegen von Tastenden der Bügelmessschraube im nachfolgenden Schritt gestatten, wobei die Tastenden der Bügelmessschrauben aber die Stirnflächen des Längennormals ungehindert erreichen. Die Unterstützungsflächen müssen hierbei nicht eben ausgebildet sein, sie können insbesondere eine zylindrische oder halbzylindrische Form aufweisen oder in einer geeigneten Art und Weise konkav, gewölbt oder beispielsweise V-förmig ausgebildet sein. Wesentlich ist allein, dass die Unterstützungsflächen die Tastenden der Bügelmessschraube, bevorzugt an den Außenmantelflächen der Tastenden, abstützen und halten können. Sodann werden die Tastenden der Bügelmessschraube auf diese Unterstützungsflächen aufgelegt, so dass die Bügelmessschraube über ihre Tastenden, die auf den Unterstützungsflächen aufliegen, gehalten wird. Hierdurch ergibt sich eine eindeutige Lage der Tastenden der Bügelmessschraube relativ zu den Stirnseiten und Bezugsflächen des Längennormals. In einem abschließenden Schritt wird die Länge des Längennormals mit der Bügelmessschraube gemessen, und es werden die entsprechenden Bezugsmarken an der Bügelmessschraube, insbesondere etwa am Fühltrieb, abgeglichen, also insbesondere Bezugsmarke beziehungsweise Ablesemarke und Skalierung auf einen erwarteten, durch die bekannte Länge des Längennormals vorgegebenen Wert eingestellt. Die hier genannten Schritte müssen nicht notwendigerweise in der beschriebenen Reihenfolge durchgeführt werden, insbesondere sind der erste und der zweite Schritt gegeneinander austauschbar; so ist es ohne Weiteres denkbar, die Unterstützungsflächen an die Enden des Längennormals anzubringen, bevor das Längennormal mittels einer Vorrichtung in im Wesentlichen horizontaler Lage fixiert wird.

Weiter wird eine Vorrichtung zur Kalibrierung einer Bügelmessschraube mittels eines Längennormals vorgeschlagen. Hierbei ist ein das Längennormal in in etwa horizontaler Lage aufnehmender Halter vorgesehen, wobei die Enden des Längennormals mit Unterstützungsflächen versehen sind, auf denen Tastenden der Bügelmessschraube zur Abstützung auflegbar sind. Die Vorrichtung, die aus mehreren, voneinander unabhängigen Bestandteilen bestehen kann, weist demzufolge einen Halter zur Aufnahme des Längennormals in der vorstehend bereits beschriebenen, im Wesentlichen horizontalen Lage auf, sowie Unterstützungsflächen, mit denen die Enden des Längennormals versehen werden oder versehen sind. Die Unterstützungsflächen sind folglich lösbar an dem Längennormal anzubringen, oder in anderen denkbaren Ausführungsformen bereits fest mit dem Längennormal verbunden. Insbesondere ist auch denkbar, das Längennormal bereits mit angeformten oder sogar einstückig zu diesem ausgebildeten Unterstützungsflächen zu versehen. Auf diesen Unterstützungsflächen sind die Tastenden der Bügelmessschraube auflegbar, wobei die Unterstützungsflächen diese Tatsenden abstützen und somit letztlich ein Halten der Bügelmessschraube, die die Tastenden aufweist, in einer vorgegebenen, definierten Position relativ zum Längennormal bewirken. Hierdurch wird verhindert, dass eine nachteilige Winkelverschiedenheit zwischen der Längsachse des Längennormals und den Längsachsen der Tastenden auftreten kann, die die Mess- und damit die Kalibriergenauigkeit in unerwünschter Weise beeinflussen könnte. Ferner wird hierdurch eine einfache Handhabbarkeit der Vorrichtung durch einen einzigen Bediener gewährleistet. Fehleranfälliges Hantieren mit Längennormal und Bügelmessschraube insbesondere im Zuge des Mess- und/oder Kalibriervorganges wird damit vermieden.

In einer weiteren Ausführungsform bestehen die Unterstützungsflächen aus reibungsarmen Material. Durch diese Ausführung aus reibungsarmen Material wird eine unerwünschte Friktion zwischen den Unterstützungsflächen und den Tastenden der Bügelmessschraube, die relativ zu dem Längennormal zum Zwecke der Messung und Kalibrierung auf den Unterstützungsflächen bewegt werden müssen, minimiert. Eine solche unerwünschte Reibung könnte in ungünstigen Fällen zu einer unzutreffenden Messung und/oder Kalibrierung führen, weil der Bediener über seine Fühlschraube unzutreffend einen Anschlag des Tastendes an dem Längennormal annimmt oder die Fühlschraube weiter als erforderlich dreht, da er ein bereits erfolgtes Anliegen des Tastendes an dem Längennormal fälschlich für eine noch zu überwindende Reibung auf der Unterstützungsflächen halten könnte. Reibungssparendes Material ist hierbei ein solches, das aufgrund seiner Materialstruktur einen geringen Reibungsbeiwert aufweist und/oder in einer solchen Weise bearbeitet ist, dass keine oder nur eine geringe Reibung auftritt.

In einer weiteren, besonders bevorzugten Ausführungsform sind die Unterstützungsflächen Verlagerungskörper, insbesondere Axialverlagerungskörper. Verlagerungskörper sind hierbei solche, die ihre Lage im Raum relativ zu anderen Bestandteilen der Vorrichtung verändern können, insbesondere nämlich in Axialrichtung der Tastenden der Bügelmessschraube und/oder des Längennormals. Dies bedeutet, dass die Unterstützungsflächen im Zuge des Messens und/oder Kalibrierens, also des Verlagerns des mindestens einen Tastendes der Bügelmessschraube in Richtung auf eine Stirnseite und Bezugsfläche des Längennormals hin ihre Lage im Raum ebenfalls verändern können, bevorzugt nämlich zusammen mit dem von ihnen unterstützten Tastende auf das Längennormal hin verlagern. Solche Verlagerungskörper, die ausschließlich in Axialerstreckung der Tastenden wirksam werden, werden als Axialverlagerungskörper bezeichnet. Denkbar sind die unterschiedlichsten Ausführungsformen der Verlagerungskörper, insbesondere nämlich Pendelkörper, also solche, die in der Art eines Pendels um einen Anlenkpunkt oder eine Schwenkachse schwenkbeweglich verlagerbar sind, oder ganz bevorzugt Rollenkörper, bei denen die Verlagerung einer Mantelfläche relativ zu einer und/oder um eine Lagerachse erfolgt. Gerade Letztere können in besonders bevorzugter und einfacher Art und Weise beispielsweise als kugelgelagerte Unterstützungsrollen ausgeführt sein, wobei die Unterstützungsflächen Mantelflächen der Unterstützungsrollen sind. Näheres zeigen die Zeichnungen.

In einer weiteren, bevorzugten Ausführungsform sind die Unterstützungsflächen an Hülsen ausgebildet oder von Hülsen gebildet. Damit ist gemeint, dass Hülsen vorgesehen sind, die insbesondere zum Aufschieben auf endseitige Bereiche des Längennormals dienen, und an diesen Hülsen Unterstützungsflächen ausgebildet sind, beispielsweise als die Hülsen längsseitig überragende Auflageflächen oder als Fortführung der Hülsen mit beispielsweise oberseitiger Ausnehmung aus dem Hülsenmantel. Hierbei ist einerseits denkbar, dass die Hülsen ihrerseits die Unterstützungsflächen bilden, beispielsweise als einseitige Fortsetzung des Hülsenmantels und hierbei über eine Innenmantelfläche, die eine Hülseausnehmung umgreift. Andererseits ist es möglich, dass beispielsweise die bereits beschriebenen Verlagerungskörper an den Hülsen ausgebildet oder an den Hülsen angeordnet sind, also zusammen mit diesen gehandhabt werden können. Insbesondere ist hierbei vorgesehen, dass Verlagerungskörper in Hülsen integriert sind, die Hülsen also Verlagerungskörper wie beispielsweise Unterstützungsrollen aufweisen.

In einer weiteren Ausführungsform ist vorgesehen, dass die Hülsen eine Festlegeeinrichtung zur lösbaren Festlegung an dem Längennormal aufweisen. Die Hülsen sind demzufolge so ausgebildet, dass sie lösbar an dem Längennormal festgelegt werden können, was einen universellen Einsatz der Hülsen auch an mehreren Längennormalen möglich macht. Gleichzeitig ist hierbei in der an dem Längennormal festgelegten Position eine eindeutige Positionierung der Hülsen an dem Längennormal möglich, wobei über die Festlegeeinrichtung verhindert wird, dass sich die Hülsen unbeabsichtigt an dem Längennormal verschieben oder gar unbeabsichtigt gelöst werden können. Als Festlegeeinrichtung kann beispielsweise eine beliebige, aus dem Stand der Technik bekannte Klemmvorrichtung, beispielsweise über eine in einer Gewindebohrung der Hülse geführte Madenschrauben, ein Klemmhebel oder ähnliches dienen. Relevant ist allein, dass die Hülsen über die Festlegeeinrichtung in ausreichend sicherer Weise auf oder an dem Längennormal fixiert werden können, ohne dass die Festlegeeinrichtung das Längennormal unnötig beansprucht; insbesondere ist zu vermeiden, dass die Festlegeeinrichtung unnötige mechanische Kräfte oder das Material des Längennormals beeinträchtigende Kräfte ausübt.

In einer weiteren Ausführungsform ist vorgesehen, dass der Halter von auf einer Grundplatte oder -schiene angeordneten Stützen gebildet ist oder solche Stützen umfasst. Der Halter zur Aufnahme des Längennormals sieht demzufolge Stützen vor, wobei diese auf einer Grundplatte oder Grundschiene angeordnet sind. Auf diese Art und Weise kann ein Halten des Längennormals über dem Niveau der Arbeitsunterlage erfolgen, wobei der Höhenunterschied durch die Stützen und die Grundplatte oder -schiene vorgegeben wird. Es ist hierbei eine gute Zugänglichkeit und Handhabbarkeit des Längennormals bei gleichzeitig definiertem Halten durch die Stützen gewährleistet. Auch kann das Längennormal in dem Halter kalibrierbereit verbleiben, wenn die Bügelmessschraube zur Durchführung von Messungen abgenommen ist und verwendet wird.

In einer weiteren Ausführungsform sind die Stützen auf der Grundplatte oder -schiene zueinander verschieblich gelagert, beispielsweise in einer T-Nut. Hierdurch wird mit einer einzigen Grundplatte oder -schiene dem Umstand Rechnung getragen, dass unterschiedlich lange Längennormale zum Einsatz kommen können, um unterschiedlich dimensionierte Bügelmessschrauben zu kalibrieren. Hierbei ist ausreichend, dass eine der Stützen relativ zur anderen, festen Stützen verschieblich gelagert ist, bevorzugt aber sind beide Stützen zueinander verschieblich. Auf diese Weise kann in weiten Grenzen eine große Auswahl an Längennormalen in jeweils optimaler Art und Weise mit optimal gewählten Haltepunkten am Längennormal gehalten werden.

In einer besonders bevorzugten Ausführungsform weisen die Stützen im Wesentlichen V-förmige Längennormal-Aufnahmen auf. Die im Wesentlichen V-förmigen Längennormal-Aufnahmen sorgen hierbei für eine zwangsweise Positionierung des üblicherweise zylindrisch ausgebildeten Längennormals, dadurch, dass das Längennormal bestrebt sein wird, den tiefsten Punkt innerhalb der V-förmigen Längennormal-Aufnahme anzunehmen und hierdurch eine zwangsweise Führung durch die beiden Innenflanken der V-förmigen Längennormal-Aufnahme erfährt. Zusätzlich zu dieser V-förmigen Ausbildung der Längennormal-Aufnahme kann noch eine Fixiereinrichtung beispielsweise als Klemmeinrichtung vorgesehen sein, die ein unbeabsichtigtes Verschieben des Längennormals innerhalb der Längennormal-Aufnahme verhindert.

Weitere vorteilhafte Ausführungsformen ergeben sich aus den Unteransprüchen und aus Kombinationen derselben.

Die Erfindung wird nachfolgend anhand von Ausführungsbeispielen und Figuren näher erläutert.

Es zeigen
- Figur 1: eine Vorrichtung zur Kalibrierung einer Bügelmessschraube mit Bügelmessschraube und Längennormal in Kalibrieranordnung;
- Figur 2: einen Halter zur Aufnahme des Längennormals;
- Figur 3: eine eine Unterstützungsfläche aufweisende Hülse an einem Ende des Längennormals;
- Figur 4: eine Hülse mit Festlegeeinrichtung an einem Ende des Längennormals;
- Figur 5: eine schematische Darstellung einer als Verlagerungskörper ausgebildeten Unterstützungsfläche im Längsschnitt und
- Figur 6: die Darstellung aus Figur 5 im Querschnitt.

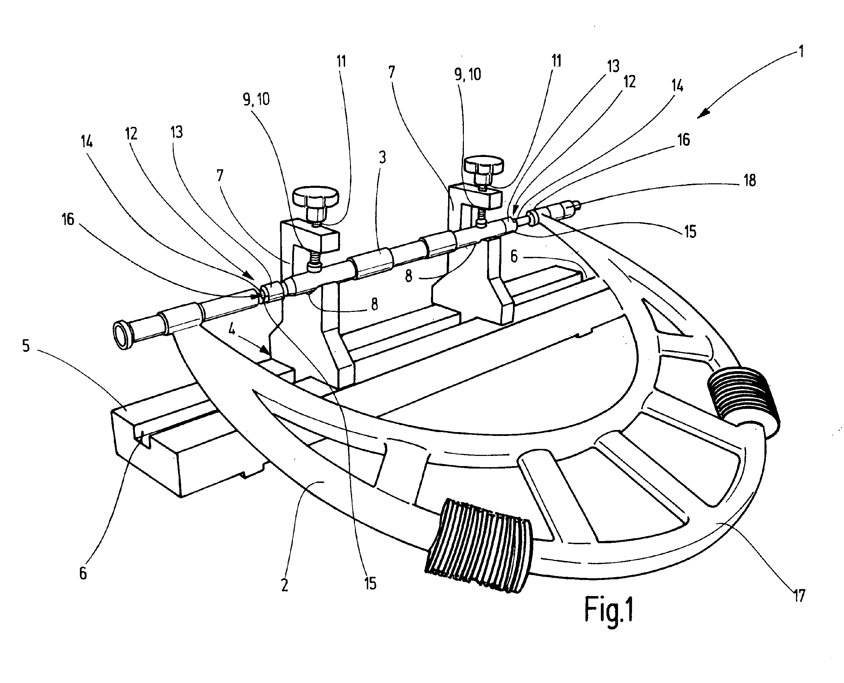

Figur 1 zeigt eine Vorrichtung 1 zur Kalibrierung einer Bügelmessschraube 2 mittels eines Längennormals 3. Die Vorrichtung 1 weist einen Halter 4 zur im Wesentlichen horizontalen Aufnahme des Längennormals 3 auf, wobei der Halter 4 aus einer Grundplatte 5 gebildet wird, die oberseitig in Längserstreckung eine Nut 6 aufweist, in der verschieblich zwei Stützen 7 gelagert sind, die jeweils eine V-förmige Längennormal-Aufnahme 8 zur Aufnahme des Längennormals 3 aufweisen, die von einer mit ihnen einstückig als Klemmeinrichtung 9 ausgebildeten Fixiereinrichtung 10 jeweils mittig übergriffen wird, so dass das Längennormal 3 innerhalb der V-förmigen Längennormal-Aufnahme 8 über eine Klemmschraube 11 der Klemmeinrichtung 9 kraftbeaufschlagt und hiermit fixiert werden kann. Das Längennormal 3 weist sich in seiner Längserstreckung jeweils gegenüberliegende Enden 12 auf, über die jeweils eine Hülse 13 derart gesteckt ist, dass die Hülse 13 jeweils das Ende 12 des Längennormals 3 umgreift, hierbei aber dessen jeweilige Stirnseite 14 frei lässt. An den Hülsen 13 sind jeweils unterseitig halbseitig Unterstützungsflächen 15 vorgesehen, auf denen Tastenden 16 der Bügelmessschraube 2 aufliegen. Die Bügelmessschraube 2 wird folglich über ihr Tastenden 16 auf den Unterstützungsflächen 15 aufliegend gehalten. Gleichzeitig liegt die Bügelmessschraube 2 mit ihrem Bügelzenit 17 beispielsweise auf einer hier nicht dargestellten Arbeitsfläche auf. In der dargestellten Position muss die Bügelmessschraube 2 folglich nicht vom Bediener und auch nicht von einer Hilfsperson gehalten werden. Die Kalibrierung der Bügelmessschraube 2 erfolgt in der üblichen Art und Weise über das Anlegen der Tastenden 16 an die Stirnseiten 14 des Längennormals 3, insbesondere durch Betätigen einer Fühlschraube 18 der Bügelmessschraube 2 und entsprechendes Abgleichen von Bezugsmarken und/oder Skalierungen.

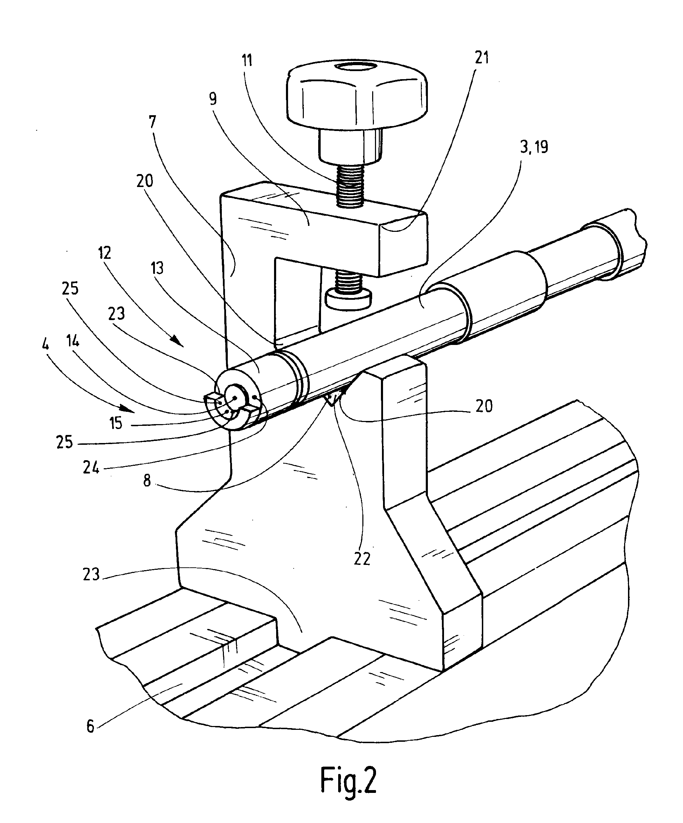

Figur 2 zeigt den Halter 4 in Ausschnittsdarstellung mit der Stütze 7, in deren V-förmige Längennormal-Aufnahme 8 das Längennormal 3, das als zylindrischer Rotationskörper 19 ausgebildet ist, eingelegt ist. Die V-förmige Längennormal-Aufnahme 8 weist zur Ausbildung des V sich gegenüberliegende Innenflanken 20 auf, durch die das Längennormal 3 zwangsgeführt wird. Insbesondere ist hierdurch eine eindeutige Positionierung von Längennormalen 3 auch unterschiedlicher Durchmesser möglich. Die V-förmige Längennormal-Aufnahme 8 wird von der Klemmeinrichtung 9 übergriffen, dergestalt, dass in einem die V-förmige Längennormal-Aufnahme 8 übergreifenden Arm 21 eine quer zur Lage des Längennormals 3 und in Richtung auf einen Tiefstpunkt 22 der V-förmigen Längennormal-Aufnahme 8 verstellbare Klemmschraube 11 eingebracht ist, mittels derer das Längennormal 3 in Richtung auf den Tiefstpunkt 22 kraftbeaufschlagt und dadurch sicher fixiert werden kann. Die Stütze 7 weist zu ihrer formangepassten Führung in der Nut 6 einen entsprechenden Nutstein 23 auf. Auf diese Weise ist die Stütze 7 innerhalb der Nut 6 längsverschieblich gelagert, so dass unterschiedlich lange Längennormale 3 jeweils in optimaler Weise gehalten und fixiert werden können. Auf das Ende 12 des Längennormals 3 ist die Hülse 13 aufgesteckt, die eine in etwa halbseitige Ausnehmung 23 aus dem Hülsenmantel 24 aufweist, wobei die Ausnehmung 23 oberseitig angeordnet ist. Hierdurch ergibt sich eine Freilage der Stirnseite 14 des Endes 12 des Längennormals 3 und an einer Hülsenmantelinnenseite 25 die Ausbildung der Unterstützungsfläche 15 zur Auflage des hier nicht dargestellten Tastendes 16 der Bügelmessschraube 2.

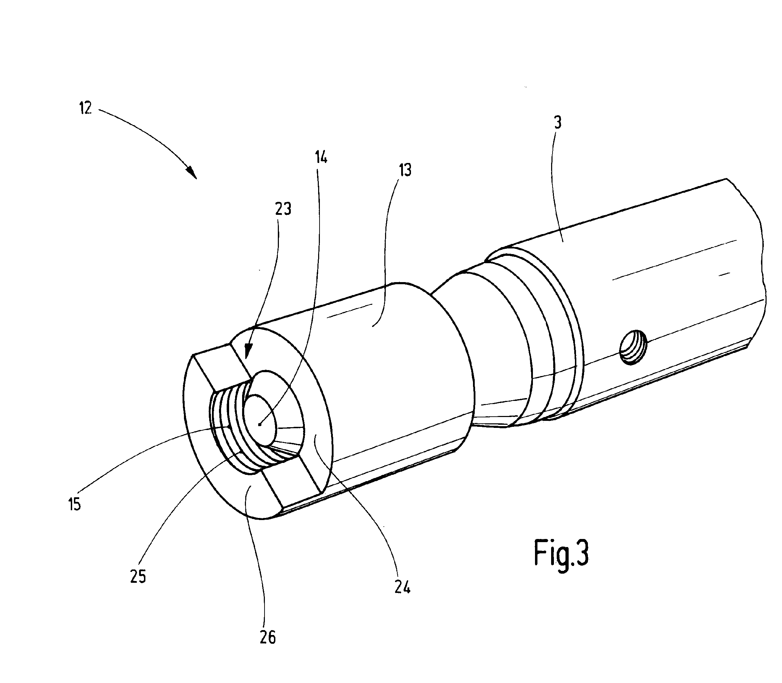

Figur 3 zeigt das Ende 12 des Längennormals 3 mit aufgesteckter Hülse 13, die die Ausnehmung 23 aus dem Hülsenmantel 24 aufweist. Auf der der Ausnehmung 23 gegenüberliegenden Hülsenmantelinnenseite 25 ist die Unterstützungsfläche 15 ausgebildet. Die Hülse 13 besteht aus reibungsarmen Material 26, das im Bereich der Unterstützungsfläche 15 zur weiteren Verringerung der möglichen Reibung mit dem aufzunehmenden Tastende 16 (nicht dargestellt) bevorzugt weiter feinbearbeitet ist. Dadurch, dass das hier nicht dargestellte Tastende 16 nur auf der Unterstützungsfläche 15 aufliegt und im Übrigen frei beweglich ist, kann dieses auf die Stirnseite 14 des Längennormals 3 zu- und wegbewegt werden, um die Messung und den Kalibriervorgang vorzunehmen, wobei das nicht dargestellte Tastende 16 auf der Unterstützungsfläche 15 aufliegt und die nicht dargestellte Bügelmessschraube 2 hält (vergleiche Figur 1).

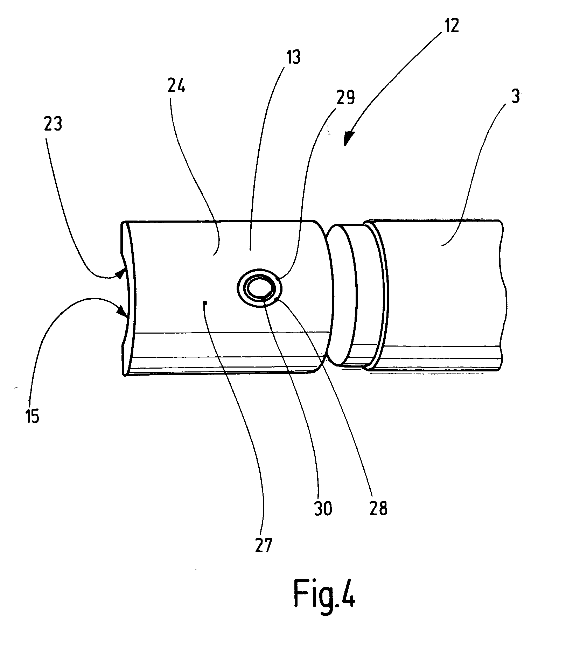

Figur 4 zeigt die Hülse 13, die auf das Ende 12 des Längennormals 3 aufgesteckt ist, von ihrer Hülsenunterseite 27 her, also von der der Ausnehmung 23 gegenüberliegenden Hülsenseite. Auf der Hülsenunterseite 27 ist eine Festlegeeinrichtung 28 angeordnet, die aus einer an der Hülsenunterseite 27 in den Hülsenmantel 24 eingebrachten, quer zur Längserstreckung des Längennormals 3 verlaufenden Gewindebohrung 29 und einer mit dieser zusammenwirkenden Madenschraube 30 gebildet ist. Die Madenschraube 30 beaufschlagt hierbei das Ende 12 des Längennormals 3 in der Hülse 13 klemmend. Die Festlegeeinrichtung 28 verhindert ein unbeabsichtigtes Verrutschen oder Abgleiten der Hülse 13 vom Ende 12 des Längennormals 3. Sie verhindert ferner ein unbeabsichtigtes Verkippen oder Verkanten der Hülse 13 auf dem Ende 12 des Längennormals 3 insbesondere bei Auflegen der nicht dargestellten Bügelmessschraube 2 über deren Tastenden 16 auf die Unterstützungsfläche 15.

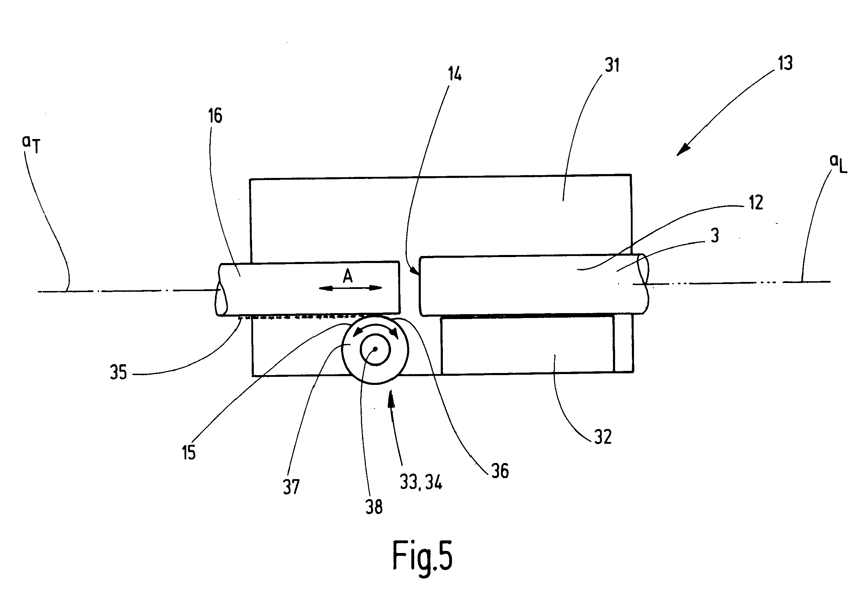

Figur 5 zeigt in schematischer Darstellung im Längsschnitt eine aus Metallplatten 31 gebildete Hülse 13 (wobei die Hülse 13 hier nicht als Rotationskörper ausgeführt ist). In die Hülse 13 ist auf einem zwei Metallplatten 31 beabstandet verbindenden Lagerblock 32 das Ende 12 des Längennormals 3 aufgelegt und über eine hier nicht dargestellte Festlegeeinrichtung 28 fixiert. An der Hülse 13 ist die Unterstützungsfläche 15 als Verlagerungskörper 33 ausgebildet, nämlich als Axialverlagerungskörper 34. Der Axialverlagerungskörper 34 erlaubt die Axialverlagerung A des auf ihn aufgelegten Tastendes 16 der nicht dargestellten Bügelmessschraube 2 in Richtung auf die Stirnseite 14 des Längennormals 3 hin oder von dieser weg. Die Axialverlagerung A erfolgt hierbei in einer Tastendenlängsachse a_{T}, wobei idealer Weise die Tastenden a_{T} mit einer Längennormallängsachse a_{L} zusammenfällt. Es ergibt sich zur Führung und Axialverlagerung A des Tastendes 16 eine Lagerebene 35 die oberseitig (tangential) einer Mantelfläche 36 des als Rollenkörper 37 ausgebildeten Verlagerungskörper 33 ausgebildet ist. Bei der Axialverlagerung A des Tastendes 16 wird folglich die Mantelfläche 36 in der Lagerebene 35 um eine Lagerachse 38 des Rollenkörpers 37 verlagert, die Mantelfläche 36 also durch Drehung des Rollenkörpers 37 gedreht. Auf diese Weise wird eine Friktion zwischen Unterstützungsfläche 15 (die hier von der Mantelfläche 36 des Rollenkörpers 37 gebildet wird) und dem Tastende 16 während der Axialverschiebung A praktisch vollständig vermieden. Die Axialverschiebung A kann erfolgen, ohne dass von der Unterstützungsfläche 15 Reibungskräfte auf das Tastende 16 übertragen werden und die Axialverschiebung A behindern könnten.

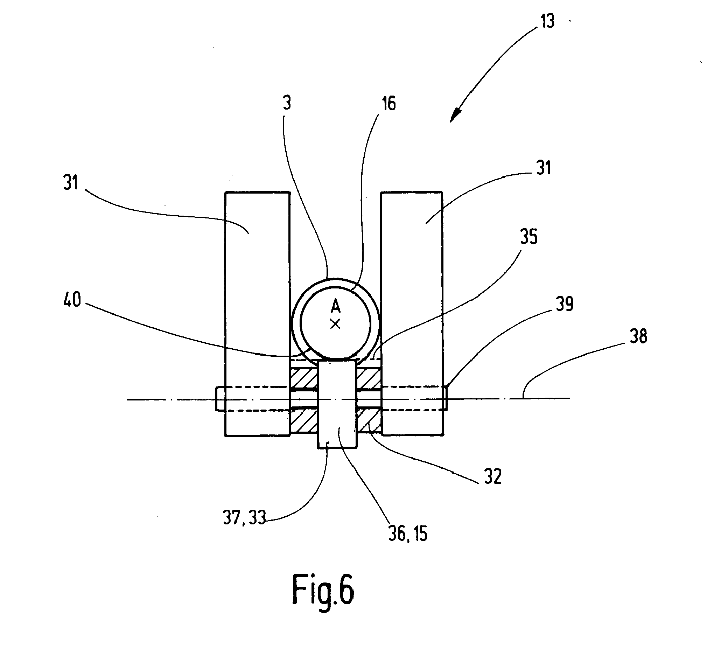

Figur 6 zeigt die aus Metallplatten 31 mit einem unterseitig zwischen ihnen gelagerten Lagerblock 32 zur Aufnahme des hier nicht dargestellten Längennormals 3 gebildete Hülse 13. Zwischen den Metallplatten 31 (die selbstverständlich auch aus anderen Materialien denn aus Metall bestehen können) ist unterseitig vor dem Lagerblock 32 der als Rollenkörper 37 ausgebildete Verlagerungskörper 33 angeordnet, wobei der Rollenkörper 37 um die Lagerachse 38 drehbeweglich auf einer durch die Metallplatten 31 durchgesteckten Halteachse 39 gelagert ist. Außenumfangsseitig weist der Rollenkörper 37 die Mantelfläche 36 auf, die die Unterstützungsfläche 15 zur Auflage des Tastendes 16 der nicht dargestellten Bügelmessschraube 2 bildet. Das Tastende 16 liegt folglich unterseitig mit seinem Umfang 40 tangential in der Lagerebene 35 auf der Mantelfläche 36 des Rollenkörpers 37 auf. Hierdurch ist eine die Axialverlagerung A des Tastendes 16 behindernde Friktion zwischen der Unterstützungsfläche 15 und dem Tastende 16 praktisch vollständig ausgeschlossen, da sich die Unterstützungsfläche 15 als Mantelfläche 36 des Rollenkörpers 37 während der Axialverlagerung A des Tastendes 16 dreht und nicht feststeht. Auf unerwünschter Friktion zwischen Unterstützungsfläche 15 und Tastende 16 beruhende Mess- und Kalibrierungsfehler können auf diese Weise und mit dieser Ausführungsform praktisch vollständig sicher ausgeschlossen werden.

## Patentansprüche

1. Verfahren zur Kalibrierung einer Bügelmessschraube mittels eines Längennormals, **gekennzeichnet durch** folgende Schritte:
- Mittels einer Vorrichtung erfolgendes Fixieren des Längennormals in im Wesentlichen horizontaler Lage,
- Anbringen von Unterstützungsflächen an die Enden des Längennormals,
- Auflegen von Tastenden der Bügelmessschraube auf die Unterstützungsflächen und
- Messen der Länge des Längennormals mit der Bügelmessschraube und Abgleichen von Bezugsmarken.

2. Vorrichtung zur Kalibrierung einer Bügelmessschraube mittels eines Längennormals, **gekennzeichnet durch** einen das Längennormal (3) in in etwa horizontaler Lage aufnehmenden Halter (4), wobei Enden (12) des Längennormals (3) mit Unterstützungsflächen (15) versehen sind, auf denen Tastenden (16) der Bügelmessschraube (2) zur Abstützung auflegbar sind.

3. Vorrichtung nach Anspruch 1, **dadurch gekennzeichnet, dass** die Unterstützungsflächen (15) aus reibungsarmen Material (26) bestehen.

4. Vorrichtung nach einem der vorhergehenden Ansprüche, **dadurch gekennzeichnet, dass** die Unterstützungsflächen (15) Verlagerungskörper (33), insbesondere Axialverlagerungskörper (34) sind.

5. Vorrichtung nach einem der vorhergehenden Ansprüche, **dadurch gekennzeichnet, dass** die Unterstützungsflächen (15) an Hülsen (13) ausgebildet sind oder von Hülsen (13) gebildet sind.

6. Vorrichtung nach einem der vorhergehenden Ansprüche, **dadurch gekennzeichnet, dass** die Hülsen (13) eine Festlegeinrichtung (28) zur lösbaren Festlegung an dem Längennormal (3) aufweisen.

7. Vorrichtung nach einem der vorhergehenden Ansprüche, **dadurch gekennzeichnet, dass** der Halter (4) von auf einer Grundplatte (5) oder -schiene angeordneten Stützen (7) gebildet ist oder Stützen (7) umfasst.

8. Vorrichtung nach einem der vorhergehenden Ansprüche, **dadurch gekennzeichnet, dass** die Stützen (7) auf der Grundplatte (5) oder -schiene zueinander verschieblich gelagert sind.

9. Vorrichtung nach einem der vorhergehenden Ansprüche, **dadurch gekennzeichnet, dass** die Stützen (7) im Wesentlichen V-förmige Längennormal-Aufnahmen (8) aufweisen.
